# EUROPEAN PATENT APPLICATION

(11) **EP 4 764 235 A1**
(43) Date of publication of application: **24.06.2026**
(21) Application number: 24857824.7
(22) Date of filing: 06.05.2024
(51) Int. Cl.: F16B 37/00, B60K 1/04, H01M 50/244

(54) **NUT, CONNECTION STRUCTURE, AND VEHICLE**

(30) Priority: 31.08.2023 CN 202322373635 U; 08.09.2023 CN 202322460668 U
(71) Applicant: Contemporary Amperex Intelligence Technology (Shanghai) Limited, Shanghai 201306 (CN)
(72) Inventor: WANG, Jiao, Shanghai 201306 (CN); KONG, Haitao, Shanghai 201306 (CN)
(74) Representative: Gong, Jinping
(86) International application number: PCT/CN2024/091273
(87) International publication number: WO 2025/044274

(57) **Abstract**

A nut (10), a connection structure (100), and a vehicle (1000) are disclosed. The nut (10) includes: a body portion (1), the body portion (1) having a through hole (11), and at least a part of the through hole (11) being provided with an internal thread (12), where in an axial direction of the through hole (11), the body portion (1) is provided with a plurality of annular sealing members (2).

## Description

### CROSS-REFERENCE TO RELATED APPLICATIONS

This application is based on a Chinese patent application with application number: 202322373635.3 and filing date August 31, 2023, and a Chinese patent application with application number: 202322460668.1 and filing date September 08, 2023, and claims priority to these Chinese patent applications, the entire contents of which are incorporated into this application by reference.

### TECHNICAL FIELD

This application relates to the technical field of connection structures, particularly to a nut, a connection structure, and a vehicle.

### BACKGROUND

Energy saving and emission reduction are keys to sustainable development of the automotive industry, and electric vehicles have become an important part of the sustainable development of the automotive industry due to their advantages in energy saving and environmental protection. For electric vehicles, connection sealing technology is an important factor concerning their development. When the chemical compartment is assembled to the vehicle body, it has many connection structures, and the connection sealing performance is poor.

### SUMMARY

In view of the above problems, this application provides a nut, a connection structure, and a vehicle, which can enhance the connection sealing performance of the nut.

According to a first aspect, this application provides a nut, including: a body portion, the body portion having a through hole, and at least a part of the through hole being provided with an internal thread; where in an axial direction of the through hole, the body portion is provided with a plurality of annular sealing members.

In the technical solution of the embodiments of this application, by providing a plurality of annular sealing members on the body portion in the axial direction of the through hole, during the use of the nut, the connection sealing performance of the nut is enhanced through the sealing members, where the sealing members are configured to be annular, so that the sealing members can enhance the sealing effect in the circumferential direction of the through hole. Additionally, the plurality of sealing members are distributed in the axial direction of the through hole, so that the plurality of sealing members can enhance the sealing effect in the axial direction of the through hole. This helps to enhance the sealing effect of the nut without the need to separately provide other sealing structures, so as to reduce production costs.

In some embodiments, the body portion is provided with a plurality of grooves, and each groove is provided with a sealing member.

In the above technical solution, by providing grooves, the sealing members can be located in the grooves, so that the sealing members can be prevented from detaching from the body portion, thereby enhancing the connection stability between the sealing members and the body portion. Additionally, the grooves can have a certain limiting effect on the sealing members, so as to reduce the movement of the sealing members, which helps to improve the reliability of the sealing members.

In some embodiments, the through hole includes a plurality of sub-hole sections with different cross-sectional areas, adjacent sub-hole sections define a step surface, and at least one step surface is provided with a groove.

In the above technical solution, as the through hole includes a plurality of sub-hole sections with different cross-sectional areas, during the use of the nut, the plurality of sub-hole sections can cooperate with parts of different cross-sectional area sizes of the first connecting member, and the groove is provided in the step surface, so as to reduce the difficulty of providing the groove, thereby reducing the assembly difficulty between the sealing member and the groove.

In some embodiments, an end surface of the nut in an axial direction is provided with a groove.

In the above technical solution, by providing the groove in the end surface of the nut in the axial direction, the sealing member is located at the end surface of the nut in the axial direction, so that when the end surface of the nut in the axial direction abuts against the first fixing member, the sealing member located at the end surface of the nut in the axial direction can achieve sealing between the end surface of the nut in the axial direction and the first fixing member. Additionally, the sealing member located at the end surface of the nut in the axial direction can enhance the sealing effect on the through hole in the circumferential direction at one end of the through hole in the axial direction.

In some embodiments, the through hole includes a first sub-hole section and a second sub-hole section, the first sub-hole section is a plain hole, the second sub-hole section is provided with an internal thread, a cross-sectional area of the second sub-hole section is greater than a cross-sectional area of the first sub-hole section, the first sub-hole section and the second sub-hole section define a step surface provided with a groove, and an end surface of the nut adjacent to the second sub-hole section is provided with a groove.

In the above technical solution, as the through hole includes a first sub-hole section and a second sub-hole section, the first sub-hole section and the second sub-hole section can cooperate with different structures for connection, respectively. The second sub-hole section is provided with an internal thread, the first sub-hole section and the second sub-hole section define a step surface provided with a groove, and the end surface of the nut adjacent to the second sub-hole section is provided with a groove, so that the two grooves are located on two sides of the second sub-hole section in the axial direction, respectively. In this way, when the nut cooperates with other structures through threads, the sealing members correspondingly provided in the two grooves can achieve sealing on two sides of the axial direction of the internal thread, thereby enhancing the sealing effect in the axial direction of the through hole. The sealing members are configured to be annular, so that the sealing members can enhance the sealing effect in the circumferential direction of the through hole. This helps to enhance the sealing effect of the nut.

In some embodiments, the sealing member is an elastic sealing ring.

In the above technical solution, the sealing member is disposed as an elastic sealing ring, meaning that the sealing member has certain elastic deformation performance, so that during the use of the nut, the elastic deformation of the elastic sealing ring can enhance the sealing effect, and rigid contact at the sealing place can be avoided, that is, interference of the structure at the sealing place is reduced, thereby improving the sealing effect. Additionally, the structure of the sealing member is made simpler, so as to reduce production costs.

According to a second aspect, this application provides a connection structure, the connection structure is configured to connect and fix a first fixing member and a second fixing member, the connection structure includes the nut according to any one of the above embodiments, and the plurality of sealing members are configured to seal a gap between the connection structure and the first fixing member.

In the above technical solution, by providing the nut, when the first fixing member and the second fixing member are connected through the nut, the gap between the connection structure and the first fixing member is sealed through the sealing members, thereby enhancing the connection sealing effect between the two when achieving the fixed connection of the first fixing member and the second fixing member.

In some embodiments, the connection structure includes: a first connecting member and a fixing connecting member, the first connecting member is adapted to be fixed to the first fixing member, the first connecting member is in threaded engagement with the internal thread, a sealing member is provided between the body portion and the first connecting member, a sealing member is provided between the body portion and the first fixing member, the fixing connecting member abuts against the second fixing member, and the fixing connecting member passes through the second fixing member and the through hole to be fixedly connected to the first connecting member.

In the above technical solution, as the first connecting member is adapted to be fixed to the first fixing member, the fixing connecting member passes through the second fixing member and the through hole to be fixedly connected to the first connecting member. The connection and fixation of the first fixing member and the second fixing member is achieved through the cooperation of the fixing connecting member, the nut, and the first connecting member. The fixing connecting member abuts against the second fixing member, which can prevent the fixing connecting member from detaching from the second fixing member, thereby enhancing the connection stability between the fixing connecting member and the second fixing member. As the first connecting member is in threaded engagement with the internal thread of the nut, the connection stability between the nut and the first connecting member is enhanced, and the threaded engagement method is simpler, so as to improve assembly efficiency.

A sealing member is provided between the body portion and the first connecting member, which can achieve sealing at the connection between the body portion and the first connecting member through the sealing member, and a sealing member is provided between the body portion and the first fixing member, which can achieve sealing at the connection between the body portion and the first fixing member through the sealing member, so that the connection between the body portion and the first connecting member and the connection between the body portion and the first fixing member can both achieve sealing through corresponding sealing members, thereby enhancing the connection sealing performance between the first fixing member and the second fixing member.

In some embodiments, the fixing connecting member is in threaded engagement with the first connecting member.

In the above technical solution, by providing the fixing connecting member in threaded engagement with the first connecting member, the connection stability between the fixing connecting member and the first connecting member is enhanced, and the threaded engagement method is simpler, so as to improve assembly efficiency.

In some embodiments, a sealant layer is provided between the first connecting member and the internal thread.

In the above technical solution, by providing the sealant layer, when the first connecting member is in threaded engagement with the internal thread, the sealant layer can fill the gap at the connection between the first connecting member and the internal thread, thereby achieving sealing at the connection between the first connecting member and the internal thread through the sealant layer, so as to enhance the connection sealing performance between the first connecting member and the internal thread.

In some embodiments, the connection structure further includes a sleeve, the sleeve is sleeved onto the fixing connecting member, and the sleeve is adapted to pass through the second fixing member.

In the above technical solution, by providing the sleeve, when the fixing connecting member passes through the second fixing member, the sleeve is sleeved onto the fixing connecting member, so that the structural strength at the connection between the second fixing member and the fixing connecting member can be enhanced through the sleeve, the deformation of the second fixing member is reduced, and the sleeve can prevent the fixing connecting member from directly contacting the second fixing member, so as to avoid interference between the fixing connecting member and the second fixing member. Additionally, the sleeve can also have a certain guiding effect on the fixing connecting member, so as to improve the assembly efficiency of the fixing connecting member.

According to a third aspect, this application provides a vehicle, which includes the connection structure according to any one of the above embodiments.

In the above technical solution, by providing the above connection structure, the connection and fixation of the first fixing member and the second fixing member of the vehicle can be achieved conveniently, helping to enhance the connection sealing performance between the first fixing member and the second fixing member.

In some embodiments, the first fixing member is a chemical compartment, and the second fixing member is a vehicle body cross beam.

In the above technical solution, the chemical compartment and the vehicle body cross beam are connected through the above connection structure, so that the connection and fixation of the chemical compartment and the vehicle body cross beam can be achieved, and the connection sealing performance between the chemical compartment and the vehicle body cross beam can be enhanced.

In some embodiments, the connection structure further includes a first connecting member, a separating beam is provided in the chemical compartment, and the first connecting member is fixed to the separating beam.

In the above technical solution, by fixing the first connecting member to the separating beam, the separating beam and the vehicle body cross beam are connected through the connection structure, so that the number of connection points between the vehicle body cross beam and the chemical compartment can be increased, reducing the load on other connection points between the chemical compartment and the vehicle body cross beam, thereby enhancing the connection stability between the chemical compartment and the vehicle body cross beam, and reducing the risk of connection point detachment during the whole vehicle driving process. At the same time, in the axial direction of the through hole of the nut, the body portion is provided with a plurality of annular sealing members, so that sealing at the connection point can be achieved, thereby blocking the path of water and gas entering the chemical compartment, so as to meet the sealing requirements of the chemical compartment.

In some embodiments, the first connecting member passes through the separating beam, and a bottom of the first connecting member is fixedly connected to a bottom of the separating beam.

In the above technical solution, as the first connecting member passes through the separating beam, the bottom of the first connecting member is fixedly connected to the bottom of the separating beam, and the connection stability between the first connecting member and the separating beam is enhanced. The original position of the separating beam can be used for the arrangement of the first connecting member, which means that the arrangement of the first connecting member does not additionally occupy space in the chemical compartment, thereby rationally utilizing the space in the chemical compartment, increasing space utilization rate and helping to ensure the energy density of the battery. Additionally, the bottom of the first connecting member is fixedly connected to the bottom of the separating beam, ensuring the connection stability between the two, and reducing the space occupied by the connection between the two.

In some embodiments, the chemical compartment includes a heat exchange plate configured for heat exchange of cells, and the heat exchange plate defines a top wall of the chemical compartment.

In the above technical solution, as the heat exchange plate defines the top wall of the chemical compartment, the heat exchange plate is used as the top wall of the chemical compartment, so that the structure of the original upper cover of the chemical compartment can be reduced, thereby improving the integration degree of the chemical compartment. This helps to increase the energy density of the chemical compartment, and reduce the volume and weight of the chemical compartment, so as to achieve miniaturization and lightweight design of the chemical compartment.

The above description is only an overview of the technical solutions of this application. In order to more clearly understand the technical means of this application, it can be implemented in accordance with the content of the specification, and in order to make the above and other objects, features and advantages of this application more obvious and easier to understand, the specific embodiments of this application are specifically illustrated below.

### BRIEF DESCRIPTION OF DRAWINGS

By reading the detailed description of the preferred embodiments below, various other advantages and benefits will become clear to those of ordinary skill in the art. The accompanying drawings are only for the purpose of illustrating the preferred embodiments and are not considered as limiting this application. Moreover, the same reference numerals denote the same components in all the drawings. In the drawings:
FIG. 1 is a schematic structural diagram of a vehicle according to some embodiments of this application;
FIG. 2 is a schematic cross-sectional structural diagram when a chemical compartment and a vehicle body cross beam are connected through a connection structure according to some embodiments of this application;
FIG. 3 is an enlarged view at A in FIG. 2; and
FIG. 4 is a schematic cross-sectional structural diagram of a nut shown in FIG. 2.

The reference numerals in the specific embodiments are as follows:
vehicle 1000; connection structure 100; chemical compartment 200; separating beam 201; heat exchange plate 202; motor 300; controller 400; vehicle body cross beam 500; first fixing member 600; second fixing member 700; nut 10; first connecting member 20; flange portion 21; partition 22; fixing connecting member 30; sleeve 40; sealant layer 50; body portion 1; through hole 11; sub-hole section 111, first sub-hole section 1111; second sub-hole section 1112; internal thread 12; groove 13; step surface 14; sealing member 2; and axial direction Z of the through hole.

### DESCRIPTION OF EMBODIMENTS

The embodiments of the technical solutions of this application will be described in detail below in conjunction with the accompanying drawings. The following embodiments are only used to illustrate the technical solutions of this application more clearly, and thus are only used as examples, and cannot be used to limit the protection scope of this application.

Unless otherwise defined, all technical and scientific terms used herein have the same meaning as commonly understood by one of ordinary skill in the art to which this application belongs. The terms used herein are only for the purpose of describing specific embodiments and are not intended to limit this application; and the terms "include", "have", and any variations thereof in the specification and claims of this application and the above description of the drawings are intended to cover non-exclusive inclusions.

In the description of the embodiments of this application, the technical terms "first", "second", and the like are only used to distinguish different objects, and should not be understood as indicating or implying relative importance or implicitly indicating the number, specific order, or primary and secondary relationship of the indicated technical features. In the description of the embodiments of this application, the meaning of "plurality" is two or more, unless otherwise specifically defined.

As used herein, "embodiment" means that a particular feature, structure, or characteristic described in connection with the embodiment can be included in at least one embodiment of this application. The occurrences of this phrase in various places in the specification are not necessarily all referring to the same embodiment, nor are separate or alternative embodiments mutually exclusive with other embodiments. Those of ordinary skill in the art will explicitly and implicitly understand that the embodiments described herein can be combined with other embodiments.

In the description of the embodiments of this application, the term "and/or" is merely an association describing associated objects, indicating that three relationships can exist, for example, A and/or B, which can indicate: A exists alone, A and B exist simultaneously, or B exists alone. In addition, the character "/" herein generally indicates that the preceding and following associated objects are in an "or" relationship.

In the description of the embodiments of this application, the term "plurality" refers to two or more (including two), similarly, "plurality of groups" refers to two or more groups (including two groups), and "plurality of pieces" refers to two or more pieces (including two pieces).

In the description of the embodiments of this application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", or the like is based on the orientation or positional relationship shown in the drawings, which is only for the convenience of describing the embodiments of this application and simplifying the description, and does not indicate or imply that the referred means or element must have a specific orientation, be constructed and operated in a specific orientation, and therefore should not be construed as limiting the embodiments of this application.

In the description of the embodiments of this application, unless otherwise expressly specified and limited, the technical terms "mounting", "connecting", "join", "fixing", and the like should be understood in a broad sense, for example, they can be a fixed connection, a detachable connection, or an integral connection; they can be a mechanical connection or an electrical connection; they can be a direct connection or an indirect connection through an intermediary; or they can be the internal communication between two elements or interaction relationship between two elements. For those of ordinary skill in the art, the specific meanings of the above terms in the embodiments of this application can be understood according to specific situations.

At present, from the development of the market situation, the application of traction batteries is becoming more and more widespread. Traction batteries are not only applied to energy storage power systems such as hydraulic, thermal, wind and solar power stations, but also widely applied to electric bicycles, electric motorcycles, electric vehicles, and other electric vehicles, as well as military equipment and aerospace and other fields. With the continuous expansion of the application fields of traction batteries, their market demand is also continuously increasing.

In the related art, the chemical compartment is assembled to the vehicle body, and the connection and fixation between the two is usually achieved by the connection cooperation of bolts and nuts, so as to fix the chemical compartment to the vehicle body. However, when the chemical compartment and the vehicle body are connected and fixed through bolts and nuts, the connection sealing performance of the nut is poor, and there are many involved parts, resulting in relatively high costs and relatively low assembly efficiency.

In order to alleviate at least one of the above technical problems, in the embodiments of this application, a nut with sealing members is provided, specifically configured as the nut including: a body portion, the body portion having a through hole, and at least a part of the through hole being provided with an internal thread, where in an axial direction of the through hole, the body portion is provided with a plurality of annular sealing members.

When the chemical compartment uses such a nut to connect and fix with the vehicle body, the plurality of sealing members are distributed in the axial direction of the through hole, so that the plurality of sealing members can enhance the sealing effect of the nut in the axial direction of the through hole. This helps to enhance the sealing effect of the nut without the need to separately provide other sealing structures, so as to reduce production costs.

Furthermore, in order to further improve the sealing effect of the nut, in the embodiments of this application, by configuring the sealing members to be annular, the sealing members can enhance the sealing effect in the circumferential direction of the through hole.

In short, in the context of increasing demand for assembly efficiency and sealing performance of the chemical compartment, the mounting frame of the embodiments of this application can improve the assembly efficiency and connection sealing performance of the chemical compartment, save parts, reduce costs, and reduce occupied space.

The chemical compartment disclosed in the embodiments of this application can be used for electric apparatuses using the chemical compartment as a power source or various energy storage systems using the chemical compartment as an energy storage element. The electric apparatus can be, but is not limited to, mobile phones, tablets, notebook computers, electric toys, electric tools, battery cars, electric vehicles, ships, spacecraft, and the like. The electric toys can include fixed or mobile electric toys, such as game consoles, electric vehicle toys, electric ship toys, electric aircraft toys, and the like, and the spacecraft can include airplanes, rockets, space shuttles, spaceships, and the like.

The following embodiments are described by taking an electric apparatus according to an embodiment of this application, that is, a vehicle 1000, as an example for convenience of explanation.

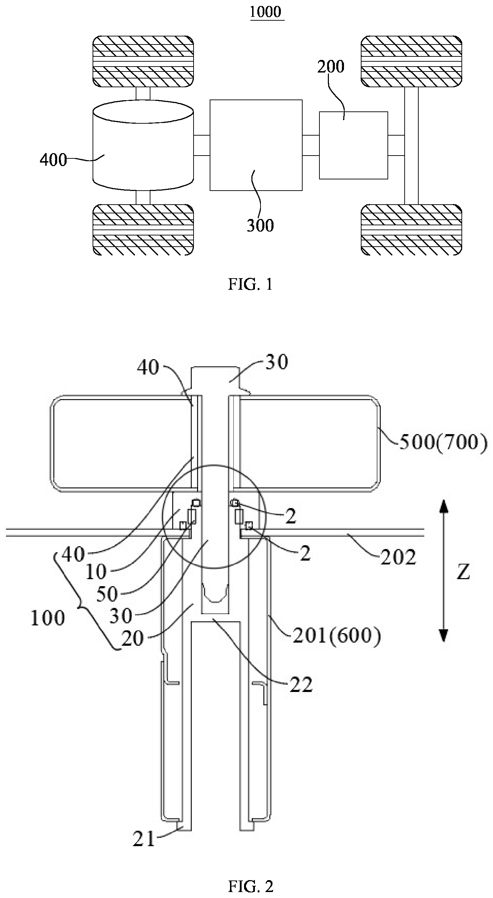

Referring to FIG. 1, FIG. 1 is a schematic structural diagram of a vehicle 1000 according to some embodiments of this application. The vehicle 1000 can be a fuel vehicle, a gas vehicle, or a new energy vehicle, and the new energy vehicle can be a pure electric vehicle, a hybrid vehicle, an extended-range vehicle, or the like. The vehicle 1000 is provided with a chemical compartment 200, and the chemical compartment 200 can be provided at the bottom, head or tail of the vehicle 1000. The chemical compartment 200 can be used for power supply of the vehicle 1000, for example, the chemical compartment 200 can serve as the operating power source of the vehicle 1000. The vehicle 1000 can also include a controller 400 and a motor 300, and the controller 400 is used to control the chemical compartment 200 to supply power to the motor 300, for example, for the working power needs of starting, navigation, and driving of the vehicle 1000.

In some embodiments of this application, cells are integrated in the chemical compartment 200, and the chemical compartment 200 can not only serve as the operating power source of the vehicle 1000, but also as the driving power source of the vehicle 1000, replacing or partially replacing fuel or natural gas to provide driving power for the vehicle 1000.

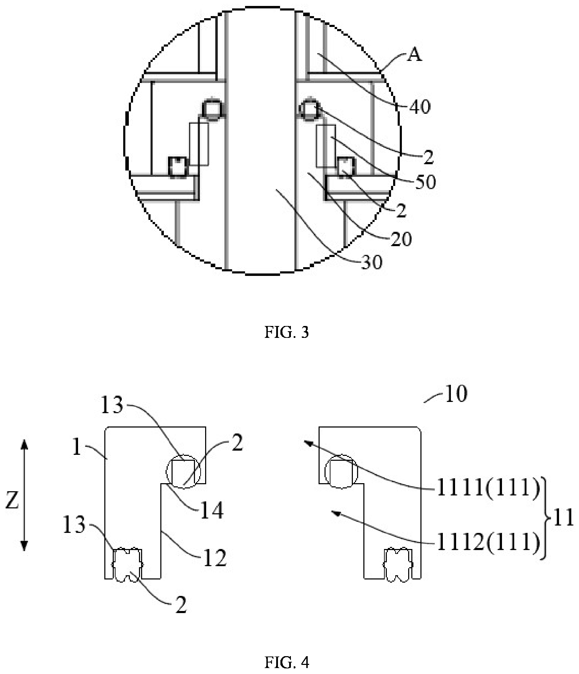

According to some embodiments of this application, referring to FIG. 4, FIG. 4 is a schematic cross-sectional structural diagram of a nut 10 along the axial direction of a through hole 11 according to some embodiments of this application. The nut 10 includes: a body portion 1, the body portion 1 having a through hole 11; in the axial direction of the through hole 11, the body portion 1 is provided with a plurality of annular sealing members 2.

As shown in FIG. 4, the Z direction in the figure is the axial direction of the through hole 11.

The body portion 1 has a through hole 11, and the through hole 11 can pass through the body portion 1 in the thickness direction, or length direction or other directions of the body portion 1. For example, the body portion 1 is configured as a columnar structure, the through hole 11 is a through hole in the axial direction (that is, the axial direction Z of the through hole 11 shown in FIG. 4) of the body portion 1, and the through hole 11 makes two sides (such as the upper side and lower side in FIG. 4) of the body portion 1 in the thickness direction communicate, so that the fixing connecting member 30 can pass through the nut 10.

The phrase "at least a part of the through hole 11 is provided with an internal thread 12" means that at least a part of the inner wall of the through hole 11 is provided with an internal thread 12, or the entire inner wall of the through hole 11 is provided with an internal thread 12, which is not limited herein.

Thus, by providing the internal thread 12, the first connecting member 20 or other structures can be in threaded engagement with the nut 10. In this way, the connection stability between the nut 10 and the first connecting member 20 or other structures can be enhanced, and the threaded engagement method is simpler, so as to improve assembly efficiency.

The phrase "in an axial direction of the through hole 11, the body portion 1 is provided with a plurality of annular sealing members 2" includes the following cases: all the plurality of sealing members 2 are located in the through hole 11 and sequentially distributed or spaced apart along the axial direction of the through hole 11, or at least a part of the plurality of sealing members 2 are in the through hole 11 and another part of the sealing members 2 are sequentially distributed or spaced apart outside the through hole 11, or all the plurality of sealing members 2 are outside the through hole 11 and sequentially distributed or spaced apart along the axial direction of the through hole 11, which is not limited herein.

It should be noted that, the phrase "the body portion 1 is provided with a plurality of annular sealing members 2" means that the sealing members 2 are assembled and connected to the body portion 1, or the sealing members 2 are integrally formed with the body portion 1, where the manner of assembly connection includes but is not limited to snap-fit, plug-fit, or magnetic attraction fit, and the sizes of the plurality of sealing members 2 can be the same or different, which is not limited herein.

In this way, when the nut 10 is used to connect two structures, the plurality of sealing rings distributed in the axial direction of the through hole 11 can play a role of multiple axial sealing in the axial direction of the through hole 11, thereby enhancing the axial sealing effect of the nut 10.

The sealing member 2 is annular, so that the sealing member 2 can enhance the circumferential sealing performance of the nut 10 while enhancing the axial sealing effect of the nut 10, and the plurality of sealing members 2 are distributed in the axial direction of the through hole 11, so that the plurality of sealing members 2 can play a role of circumferential sealing at different positions in the axial direction of the through hole 11, thereby enhancing the circumferential sealing effect of the nut 10.

It is worth noting that the sealing member 2 in the embodiments of this application can be configured as a sealing ring, a sealing gasket, or other sealing structures capable of achieving a sealing effect, which is not limited herein.

By providing a plurality of annular sealing members 2 on the body portion 1 in the axial direction of the through hole 11, during the use of the nut 10, the connection sealing performance of the nut 10 is enhanced through the sealing members 2, where the sealing members 2 are configured to be annular, so that the sealing members 2 can enhance the sealing effect in the circumferential direction of the through hole 11. Additionally, the plurality of sealing members 2 are distributed in the axial direction of the through hole 11, so that the plurality of sealing members 2 can enhance the sealing effect in the axial direction of the through hole 11. This helps to enhance the sealing effect of the nut 10 without the need to separately provide other sealing structures, so as to reduce production costs.

According to some embodiments of this application, optionally, still referring to FIG. 4, the body portion 1 is provided with a plurality of grooves 13, and each groove 13 is provided with a sealing member 2.

In other words, there are a plurality of grooves 13 and a plurality of sealing members 2, and the plurality of grooves 13 correspond one-to-one with the plurality of sealing members 2. Thus, by providing the grooves 13, the sealing members 2 can be located in the grooves 13, so that the sealing members 2 can be prevented from detaching from the body portion 1, thereby enhancing the connection stability between the sealing members 2 and the body portion 1. Additionally, the grooves 13 can have a certain limiting effect on the sealing members 2, so as to reduce the movement of the sealing members 2, which helps to improve the reliability of the sealing members 2.

The cross-sectional shape of the groove 13 can be rectangular or circular, or the shape of the groove 13 can be adapted to the shape of the sealing member 2, so as to better fix the sealing member 2.

According to some embodiments of this application, optionally, still referring to FIG. 4, the through hole 11 includes a plurality of sub-hole sections 111 with different cross-sectional areas, adjacent sub-hole sections 111 define a step surface 14, and at least one step surface 14 is provided with a groove 13.

For example, the through hole 11 includes two sub-hole sections 111, three sub-hole sections 111, or four sub-hole sections 111, which is not limited herein, and the plurality of sub-hole sections 111 sequentially communicate along the axial direction of the through hole 11, so as to ensure that the through hole 11 can pass through along its axial direction.

The "cross-sectional area" in "a plurality of sub-hole sections 111 with different cross-sectional areas" refers to the cross-sectional area of the sub-hole section 111 taken in a plane perpendicular to the axial direction of the through hole 11. For example, if the sub-hole section 111 is a cylindrical hole, the cross-sectional area is the radial cross-sectional area of the sub-hole section 111. Certainly, the sub-hole section 111 can also be configured in other shapes, which is not limited herein.

The phrase "at least one step surface 14 is provided with a groove 13" means that at least one step surface 14 of the plurality of step surfaces 14 is provided with a groove 13, or each step surface 14 of the plurality of step surfaces 14 is provided with a groove 13.

Thus, as the through hole 11 includes a plurality of sub-hole sections 111 with different cross-sectional areas, during the use of the nut 10, the plurality of sub-hole sections 111 can cooperate with parts of different cross-sectional area sizes of the first connecting member 20, and the groove 13 is provided in the step surface 14, so as to reduce the difficulty of providing the groove 13 and reduce the production difficulty, thereby reducing the assembly difficulty between the sealing member 2 and the groove 13.

According to some embodiments of this application, optionally, still referring to FIG. 4, an end surface of the nut 10 in an axial direction (such as the Z direction in FIG. 4) is provided with a groove 13.

The phrase "an end surface of the nut 10 in an axial direction is provided with a groove 13" means that the end surface at one end of the nut 10 (such as the upper end in FIG. 4) in the axial direction is provided with a groove 13, or the end surface at the other end (such as the lower end in FIG. 4) of the nut 10 in the axial direction is provided with a groove 13, or the surfaces of one end (such as the upper end in FIG. 4) and the other end (such as the lower end in FIG. 4) of the nut 10 in the axial direction are both provided with the groove 13, which is not limited herein.

Thus, by providing the groove 13 in the end surface of the nut 10 in the axial direction, the sealing member 2 is located at the end surface of the nut 10 in the axial direction, so that when the end surface of the nut 10 in the axial direction abuts against the first fixing member 600 or other structures, the sealing member 2 located at the end surface of the nut 10 in the axial direction can achieve sealing between the end surface of the nut 10 in the axial direction and the first fixing member 600 or other structures. Additionally, the sealing member 2 located at the end surface of the nut 10 in the axial direction can enhance the sealing effect on the through hole 11 in the circumferential direction at one end of the through hole 11 in the axial direction.

According to some embodiments of this application, optionally, still referring to FIG. 4, the through hole 11 includes a first sub-hole section 1111 and a second sub-hole section 1112, the first sub-hole section 1111 is a plain hole, the second sub-hole section 1112 is provided with an internal thread 12, a cross-sectional area of the second sub-hole section 1112 is greater than a cross-sectional area of the first sub-hole section 1111, the first sub-hole section 1111 and the second sub-hole section 1112 define a step surface 14 provided with a groove 13, and an end surface of the nut 10 adjacent to the second sub-hole section 1112 is provided with a groove 13. As the through hole 11 includes a first sub-hole section 1111 and a second sub-hole section 1112, the first sub-hole section 1111 and the second sub-hole section 1112 can cooperate with different structures for connection, respectively.

"A plain hole" means that the inner wall of the first sub-hole section 1111 is a smooth or approximately smooth wall surface, so that when the fixing connecting member 30 passes through the nut 10, the plain hole can reduce the friction between the fixing connecting member 30 and the nut 10, thereby improving the assembly efficiency.

The second sub-hole section 1112 is provided with an internal thread 12, and the cross-sectional area of the second sub-hole section 1112 is greater than the cross-sectional area of the first sub-hole section 1111, so as to define a step surface 14 between the first sub-hole section 1111 and the second sub-hole section 1112, and the facing direction of the step surface 14 is the axial direction of the second sub-hole section 1112.

In this way, when the groove 13 is provided in the step surface 14, the tool can enter from the second sub-hole section 1112 with a larger cross-sectional area, helping to reduce the production difficulty of the groove 13 and place the sealing member 2 into the groove 13, so as to reduce the difficulty of providing the sealing member 2 located in the groove 13. Additionally, providing the internal thread 12 on the inner wall of the second sub-hole section 1112 facilitates increase of the size of the internal thread 12, so that when the nut 10 is connected to other structures, the connection stability between the nut 10 and other structures can be increased.

Furthermore, an end surface (which is of, for example, the lower end in FIG. 4) of the nut 10 adjacent to the second sub-hole section 1112 is provided with a groove 13, so that the two grooves 13 are located on two sides of the second sub-hole section 1112 in the axial direction, respectively. In this way, when the nut 10 cooperates with other structures through threads, the sealing members 2 correspondingly provided in the two grooves 13 can achieve sealing on two sides of the internal thread 12 in the axial direction, thereby enhancing the sealing effect in the axial direction of the through hole 11. The sealing members 2 are configured to be annular, so that the sealing members 2 can enhance the sealing effect in the circumferential direction of the through hole 11, helping to enhance the sealing effect of the nut 10.

According to some embodiments of this application, optionally, the sealing member 2 is an elastic sealing ring.

Thus, the sealing member 2 is disposed as an elastic sealing ring, meaning that the sealing member 2 has certain elastic deformation performance, so that during the use of the nut 10, the elastic deformation of the elastic sealing ring can enhance the sealing effect, and rigid contact at the sealing place can be avoided, that is, interference of the structure at the sealing place is reduced, thereby improving the sealing effect. Additionally, the structure of the sealing member 2 is made simpler, so as to reduce production costs.

For example, the material of the elastic sealing member 2 can be rubber, or silicone, or other materials with elastic deformation capability, which is not limited herein.

In a second aspect, referring to FIG. 2, FIG. 2 is a schematic cross-sectional structural diagram when a connection structure 100 connects a first fixing member 600 and a second fixing member 700 according to some embodiments of this application. The connection structure 100 is configured to connect and fix the first fixing member 600 and the second fixing member 700. Referring to FIG. 2, the connection structure 100 includes: the nut 10 according to any one of the above embodiments, and the sealing member 2 is configured to seal a gap between the connection structure 100 and the first fixing member 600.

Thus, by providing the nut 10, when the first fixing member 600 and the second fixing member 700 are connected through the nut, the gap between the connection structure 100 and the first fixing member 600 is sealed through the sealing member 2, thereby enhancing the connection sealing effect between the two while achieving the fixed connection of the first fixing member 600 and the second fixing member 700.

According to some embodiments of this application, optionally, referring to FIG. 2, the connection structure 100 includes: a first connecting member 20 and a fixing connecting member 30.

The first connecting member 20 is adapted to be fixed to the first fixing member 600, the first connecting member 20 is in threaded engagement with the internal thread 12, a sealing member 2 is provided between the body portion 1 and the first connecting member 20, a sealing member 2 is provided between the body portion 1 and the first fixing member 600, the fixing connecting member 30 abuts against the second fixing member 700, and the fixing connecting member 30 passes through the second fixing member 700 and the through hole 11 to be fixedly connected to the first connecting member 20.

Thus, as the first connecting member 20 is adapted to be fixed to the first fixing member 600, the fixing connecting member 30 passes through the second fixing member 700 and the through hole 11 to be fixedly connected to the first connecting member 20, and the connection and fixation of the first fixing member 600 and the second fixing member 700 is achieved through the cooperation of the fixing connecting member 30, the nut 10, and the first connecting member 20.

The "first fixing member 600 and second fixing member 700" can be two structures that need to be connected and fixed, for example, when the nut 10 is applied to fix the chemical compartment 200 to the vehicle body, the first fixing member 600 is the chemical compartment 200, and the second fixing member 700 is the vehicle body cross beam 500 or seat cross beam, or when the nut 10 is applied to other structures, the first fixing member 600 and the second fixing member 700 can also be other structures, which is not limited herein.

Furthermore, when the first fixing member 600 and the second fixing member 700 are connected and fixed through the connection structure 100, the fixing connecting member 30 abuts against the second fixing member 700, which can prevent the fixing connecting member 30 from detaching from the second fixing member 700, thereby enhancing the connection stability between the fixing connecting member 30 and the second fixing member 700. As the first connecting member 20 is in threaded engagement with the internal thread 12 of the nut 10, the connection stability between the nut 10 and the first connecting member 20 is enhanced, and the threaded engagement method is simpler, so as to improve assembly efficiency.

A sealing member 2 is provided between the body portion 1 and the first connecting member 20, which can achieve sealing at the connection between the body portion 1 and the first connecting member 20 through the sealing member 2, and a sealing member 2 is provided between the body portion 1 and the first fixing member 600, which can achieve sealing at the connection between the body portion 1 and the first fixing member 600 through the sealing member 2, so that the connection between the body portion 1 and the first connecting member 20 and the connection between the body portion 1 and the first fixing member 600 can both achieve sealing through corresponding sealing members 2, thereby enhancing the connection sealing performance between the first fixing member 600 and the second fixing member 700.

According to some embodiments of this application, optionally, the fixing connecting member 30 is in threaded engagement with the first connecting member 20.

Thus, by providing the fixing connecting member 30 in threaded engagement with the first connecting member 20, the connection stability between the fixing connecting member 30 and the first connecting member 20 is enhanced, and the threaded engagement method is simpler, so as to improve assembly efficiency.

For example, the fixing connecting member 30 can be a bolt, or other structures that can be in threaded engagement with the first connecting member 20.

According to some embodiments of this application, optionally, still referring to FIG. 2 and FIG. 3, a sealant layer 50 is provided between the first connecting member 20 and the internal thread 12.

Thus, by providing the sealant layer 50, when the first connecting member 20 is in threaded engagement with the internal thread 12, the sealant layer 50 can fill the gap at the connection between the first connecting member 20 and the internal thread 12, thereby achieving sealing at the connection between the first connecting member 20 and the internal thread 12 through the sealant layer 50, so as to enhance the connection sealing performance between the first connecting member 20 and the internal thread 12.

According to some embodiments of this application, optionally, still referring to FIG. 2, the connection structure 100 further includes a sleeve 40, the sleeve 40 is sleeved onto the fixing connecting member 30, and the sleeve 40 is adapted to pass through the second fixing member 700.

Thus, by providing the sleeve 40, when the fixing connecting member 30 passes through the second fixing member 700, the sleeve 40 is sleeved onto the fixing connecting member 30, so that the structural strength at the connection between the second fixing member 700 and the fixing connecting member 30 can be enhanced through the sleeve 40, the deformation of the second fixing member 700 is reduced, and the sleeve 40 can prevent the fixing connecting member 30 from directly contacting the second fixing member 700, so as to avoid interference between the fixing connecting member 30 and the second fixing member 700. Additionally, the sleeve 40 can also have a certain guiding effect on the fixing connecting member 30, so as to improve the assembly efficiency of the fixing connecting member 30.

In a third aspect, this application provides a vehicle 1000, which includes the connection structure 100 according to any one of the above embodiments.

Thus, by providing the above connection structure 100, the connection and fixation of the first fixing member 600 and the second fixing member 700 of the vehicle 1000 can be achieved conveniently, helping to enhance the connection sealing performance between the first fixing member 600 and the second fixing member 700.

According to some embodiments of this application, optionally, the first fixing member 600 is a chemical compartment 200, and the second fixing member 700 is a vehicle body cross beam 500.

It should be noted that the top cover of the chemical compartment 200 can be defined by a vehicle body floor and/or a heat exchange plate 202, and cells are provided in the chemical compartment 200.

Thus, the chemical compartment 200 and the vehicle body cross beam 500 are connected through the above connection structure 100, so that the connection and fixation of the chemical compartment 200 and the vehicle body cross beam 500 can be achieved, and the connection sealing performance between the chemical compartment 200 and the vehicle body cross beam 500 can be enhanced.

Certainly, the second fixing member 700 can also be a seat cross beam, a vehicle body longitudinal beam, a vehicle body floor, or other structures, which is not limited herein.

According to some embodiments of this application, optionally, the connection structure 100 further includes a first connecting member 20, a separating beam 201 is provided in the chemical compartment 200, and referring to FIG. 2, the first connecting member 20 is fixed to the separating beam 201.

The "separating beam 201" refers to an inherent structure in the chemical compartment 200, the separating beam 201 is a structural beam used to separate a plurality of cells 205 to reduce the risk of thermal runaway, and the separating beam 201 is usually located inside the chemical compartment 200.

It should be noted that, in the related art, when the chemical compartment 200 is fixed to the vehicle body cross beam 500, the outer shell of the chemical compartment 200 is directly fixed to the vehicle body cross beam 500. However, due to the size limitation of the outer shell of the chemical compartment 200, the number of connection points between the chemical compartment 200 and the vehicle body cross beam 500 is small, which leads to a large load on a single connection point, and there is a risk of connection point detachment during the whole vehicle driving process.

In the embodiments of this application, by fixing the first connecting member 20 to the separating beam 201, the separating beam 201 and the vehicle body cross beam 500 are connected through the connection structure 100, so that the number of connection points between the vehicle body cross beam 500 and the chemical compartment 200 can be increased, reducing the load on other connection points between the chemical compartment 200 and the vehicle body cross beam 500, thereby enhancing the connection stability between the chemical compartment 200 and the vehicle body cross beam 500, and reducing the risk of connection point detachment during the whole vehicle driving process.

At the same time, in the axial direction of the through hole 11 of the nut 10, the body portion 1 is provided with a plurality of annular sealing members 2, so that sealing at the connection point can be achieved, thereby blocking the path of water and gas entering the chemical compartment 200, so as to meet the sealing requirements of the chemical compartment 200.

According to some embodiments of this application, optionally, still referring to FIG. 2, the first connecting member 20 passes through the separating beam 201, and a bottom of the first connecting member 20 is fixedly connected to a bottom of the separating beam 201.

For example, the first connecting member 20 is embedded in the separating beam 201, such that the connection stability between the first connecting member 20 and the separating beam 201 is enhanced, and the original position of the separating beam 201 is used for the arrangement of the first connecting member 20, which means that the arrangement of the first connecting member 20 does not additionally occupy space in the chemical compartment 200, thereby rationally utilizing the space in the chemical compartment 200, increasing space utilization rate, and helping to ensure the energy density of the battery.

The first connecting member 20 can be configured as a tubular structure, so that the lower end of the fixing connecting member 30 can extend into the first connecting member 20 and be in threaded engagement with the first connecting member 20. Referring to FIG. 2, the tubular structure is provided with a partition 22 at the bottom for closing the inner cavity of the tubular structure, so as to further block the path of water and gas entering the chemical compartment 200, meeting the sealing requirements of the chemical compartment 200.

At the same time, the bottom of the first connecting member 20 is fixedly connected to the bottom of the separating beam 201. For example, a flange portion 21 is provided at the bottom of the first connecting member 20, and at least a part of the flange portion 21 is located at the bottom of the separating beam 201 and abuts against the bottom of the separating beam 201, so that the bottom of the separating beam 201 can be welded and connected to the bottom of the first connecting member 20, ensuring the connection stability between the two, and reducing the space occupied by the connection between the two.

It should be noted that, by providing the flange portion 21 at the bottom of the first connecting member 20, the bottom of the separating beam 201 can be spaced apart from the bottom plate of the chemical compartment 200, so that during later maintenance, the bottom plate of the chemical compartment 200 can be directly disassembled, so as to reduce the maintenance difficulty.

According to some embodiments of this application, optionally, the chemical compartment 200 includes a heat exchange plate 202 configured for heat exchange of cells 205, and the heat exchange plate 202 defines a top wall of the chemical compartment 200.

Thus, as the heat exchange plate 202 defines the top wall of the chemical compartment 200, the heat exchange plate 202 is used as the top wall of the chemical compartment 200, so that the structure of the original upper cover of the chemical compartment 200 can be reduced, thereby improving the integration degree of the chemical compartment 200. This helps to increase the energy density of the chemical compartment 200, and reduce the volume and weight of the chemical compartment 200, so as to achieve miniaturization and lightweight design of the chemical compartment 200.

During actual assembly, the first connecting member 20 sequentially passes through the separating beam 201 and the heat exchange plate 202, and then the nut 10 is tightened on the first connecting member 20. After tightening, the sealing member 2 located at the end surface at the lower end of the axial direction of the nut 10 presses against the heat exchange plate 202, and the sealing member 2 located at the step surface 14 presses against the upper end surface of the first connecting member 20.

The sleeve 40 is pre-embedded in the vehicle body cross beam 500, the vehicle body cross beam 500 is installed, and the fixing connecting member 30 sequentially passes through the sleeve 40 and the nut 10, and is tightened at the thread in the first connecting member 20.

In this way, through the fixing connecting member 30, the sleeve 40, the nut 10, and the first connecting member 20, the separating beam 201 of the chemical compartment 200 is connected to the vehicle body cross beam 500, thereby connecting the chemical compartment 200 to the vehicle body.

The plurality of sealing members 2, the partition 22, and the sealant layer 50 can block the water and air inlet path, and seal the connection point, thereby sealing the chemical compartment 200.

According to some embodiments of this application, a nut 10 is provided. The nut 10 includes: a body portion 1, the body portion 1 having a through hole 11, and at least a part of the through hole 11 being provided with an internal thread 12, where in an axial direction of the through hole 11, the body portion 1 is provided with a plurality of annular sealing members 2. When the chemical compartment 200 uses such a nut 10 to connect and fix with the vehicle body, the plurality of sealing members 2 are distributed in the axial direction of the through hole 11, so that the plurality of sealing members 2 can enhance the sealing effect of the nut 10 in the axial direction of the through hole 11. This helps to enhance the sealing effect of the nut 10 and achieve sealing at the connection point, thereby blocking the path of water and gas entering the chemical compartment 200, so as to meet the sealing requirements of the chemical compartment 200.

Finally, it should be noted that: the above embodiments are only used to illustrate the technical solutions of this application, and are not intended to limit them. Although this application has been described in detail with reference to the foregoing embodiments, those of ordinary skill in the art should understand that: the technical solutions recorded in the foregoing embodiments can still be modified, or some or all of the technical features thereof can be equivalently replaced. These modifications or replacements do not make the essence of the corresponding technical solutions depart from the scope of the technical solutions of the embodiments of this application, and they should all be covered within the scope of the claims and specification of this application. In particular, as long as there is no structural conflict, the various technical features mentioned in the various embodiments can be combined in any manner. This application is not limited to the specific embodiments disclosed herein, but includes all technical solutions falling within the scope of the claims.

## Claims

1. A nut, comprising:
a body portion, the body portion having a through hole, and at least a part of the through hole being provided with an internal thread; wherein
in an axial direction of the through hole, the body portion is provided with a plurality of annular sealing members.

2. The nut according to claim 1, wherein the body portion is provided with a plurality of grooves, and each of the grooves is provided with the sealing member.

3. The nut according to claim 2, wherein the through hole comprises a plurality of sub-hole sections with different cross-sectional areas, adjacent ones of the sub-hole sections define a step surface, and at least one of the step surfaces is provided with the groove.

4. The nut according to claim 3, wherein an end surface of the nut in an axial direction is provided with the groove.

5. The nut according to claim 3 or 4, wherein the through hole comprises a first sub-hole section and a second sub-hole section, the first sub-hole section is a plain hole, the second sub-hole section is provided with the internal thread, a cross-sectional area of the second sub-hole section is greater than a cross-sectional area of the first sub-hole section, the first sub-hole section and the second sub-hole section define the step surface provided with the groove, and an end surface of the nut adjacent to the second sub-hole section is provided with the groove.

6. The nut according to any one of claims 1 to 5, wherein the sealing member is an elastic sealing ring.

7. A connection structure, wherein the connection structure is configured to connect and fix a first fixing member and a second fixing member, the connection structure comprises the nut according to any one of claims 1 to 6, and the plurality of sealing members are configured to seal a gap between the connection structure and the first fixing member.

8. The connection structure according to claim 7, wherein the connection structure comprises:
a first connecting member, the first connecting member being adapted to be fixed to the first fixing member; wherein
the first connecting member is in threaded engagement with the internal thread, the sealing member is provided between the body portion and the first connecting member, and the sealing member is provided between the body portion and the first fixing member; and
a fixing connecting member, the fixing connecting member abutting against the second fixing member, and the fixing connecting member passing through the second fixing member and the through hole to be fixedly connected to the first connecting member.

9. The connection structure according to claim 8, wherein the fixing connecting member is in threaded engagement with the first connecting member.

10. The connection structure according to claim 8 or 9, wherein a sealant layer is provided between the first connecting member and the internal thread.

11. The connection structure according to any one of claims 8 to 10, further comprising a sleeve, wherein the sleeve is sleeved onto the fixing connecting member, and the sleeve is adapted to pass through the second fixing member.

12. A vehicle, comprising the connection structure according to any one of claims 7 to 11.

13. The vehicle according to claim 12, wherein the first fixing member is a chemical compartment, and the second fixing member is a vehicle body cross beam.

14. The vehicle according to claim 13, wherein the connection structure further comprises a first connecting member, a separating beam is provided in the chemical compartment, and the first connecting member is fixed to the separating beam.

15. The vehicle according to claim 14, wherein the first connecting member passes through the separating beam, and a bottom of the first connecting member is fixedly connected to a bottom of the separating beam.

16. The vehicle according to any one of claims 13 to 15, wherein the chemical compartment comprises a heat exchange plate configured for heat exchange of cells, and the heat exchange plate defines a top wall of the chemical compartment.
